# EUROPEAN PATENT SPECIFICATION

(11) **EP 3 626 108 B1**
(45) Date of publication and mention of the grant of the patent: **03.03.2021**
(21) Application number: 19197904.6
(22) Date of filing: 18.09.2019
(51) Int. Cl.: A45D 20/12, F24F 3/16

(54) **DRYER STAND**
TROCKNERSTÄNDER
SUPPORT POUR SÈCHE-CHEVEUX

(30) Priority: 19.09.2018 US 201862733478 P; 13.06.2019 KR 20190070283
(43) Date of publication of application: 25.03.2020
(73) Proprietor: LG Electronics Inc., Seoul 07336 (KR)
(72) Inventor: YOUN, Jekwang, Seoul 08592 (KR); KIM, Youngdon, Seoul 08592 (KR); YOO, Hyunsun, Seoul 08592 (KR); CHUN, Jaehung, Seoul 08592 (KR); EUN, Yousook, Seoul 08592 (KR); KIM, Joogyeom, Seoul 08592 (KR); KIM, Sungkyung, Seoul 08592 (KR); KIM, Myongsun, Seoul 08592 (KR)
(74) Representative: Vossius & Partner Patentanwälte Rechtsanwälte mbB

(56) References cited:
- CN-Y- 2 270 133
- KR-A- 20180 043 526
- US-A1- 2017 326 491

## Description

The present disclosure relates to a dryer stand in which a dryer for discharging drying air is mounted. More particularly, the present disclosure relates to a dryer stand which can purify indoor air through a built-in air purifier.

In the case of using a dryer to dry the human body, typically, a user moves the dryer toward a dry portion to perform drying while holding the dryer.

In order to solve the inconvenience that a user should perform drying while holding the dryer, conventionally, a stand which can mount a dryer, such as KR 2015-0031643 A, has been proposed.

However, although the dryer is mounted, the stand of the related art does not have a function of purifying indoor air, while the interest in such a function has been increased recently. Accordingly, the consumer has an inconvenience in that an air purifier separate from the stand should be provided.

In this regard, KR 2006-0019298 A discloses a dryer provided with an air purification filter, which helps to purify the drying air discharged from the dryer, but has a limit in purifying indoor air.

Meanwhile, the stand according to the related art does not propose a method to optimize the flow path of air passed through the air purifier.

KR 2018 0043526 A discloses a stand for hair dryer which can adjust the height of itself.

The present disclosure has been made in view of the above problems, and provides a dryer stand that allows a user to dry a drying target without holding the dryer.

The present disclosure further provides a dryer stand that can purify indoor air separately from the mounting of the dryer.

The present disclosure further provides a dryer stand that can increase the air purification rate by optimizing the flow path of air passed through the air purifier.

According to the invention, a dryer stand comprises the features of claim 1. Such a dryer stand includes: a base which is disposed in a lower side of the dryer stand; a receptacle in which a dryer for discharging drying air can be mounted; a body which is disposed above the base and accommodates the receptacle therein at a certain height in an upward direction from the base; a fan which is accommodated in the body and cause a flow of air that is introduced into the body and discharged to the outside of the dryer stand; and an air purifier which is disposed in a flow path of air flown by the fan.

In this case, the base is provided with a suction hole through which air sucked into the body by the fan passes, so that air to be purified may be introduced into the stand.

The fan flows air from a lower side toward an upper side, and the air purifier is a plurality of air purifiers that are respectively spaced apart from each other. The plurality of air purifiers may be disposed along a vertical direction of the dryer stand.

In this case, a discharge hole through which air discharged to the outside of the body by the fan passes is formed in the side body.

Alternatively, a discharge hole through which air discharged to the outside of the body by the fan passes is formed between the upper body and the receptacle.

Unlike this, the fan flows air from one of a left side thereof and a right side thereof to the other, and the air purifier is a plurality of air purifiers that are respectively spaced apart from each other in a horizontal direction of the dryer stand.

In this case, a discharge hole through which air discharged to the outside of the body by the fan passes is formed in the side body.

Unlike this, a suction hole through which air sucked into the body by the fan passes is formed in the body.

In this case, a discharge hole through which air discharged to the outside of the body by the fan passes is formed in the body.

Alternatively, a discharge hole through which air discharged to the outside of the body by the fan passes is formed between the body and the receptacle.

Further alternatively, a discharge hole through which air discharged to the outside of the body by the fan passes is formed in the base.

### BRIEF DESCRIPTION OF THE DRAWINGS

The above and other objects, features and advantages of the present disclosure will be more apparent from the following detailed description in conjunction with the accompanying drawings, in which:
FIG. 1 is a perspective view of a state in which a dryer is mounted in a dryer stand according to an embodiment of the present disclosure;
FIG. 2 is a perspective view of a state in which a dryer is not mounted in a dryer stand according to an embodiment of the present disclosure;
FIG. 3 is a longitudinal cross-sectional view of a dryer stand according to an embodiment of the present disclosure from the left;
FIG. 4 is an exploded perspective view of an upper portion of a dryer stand according to an embodiment of the present disclosure;
FIG. 5 is a cross-sectional view of an upper portion showing a state in which a dryer is mounted in a dryer stand according to an embodiment of the present disclosure;
FIG. 6 is a use state diagram in a dryer stand according to an embodiment of the present disclosure;
FIG. 7 is a front exploded perspective view of a dryer stand according to an embodiment of the present disclosure;
FIG. 8 is a rear exploded perspective view of a dryer stand according to an embodiment of the present disclosure;
FIG. 9 is an exploded perspective view of the lower part of a dryer stand according to an embodiment of the present disclosure;
FIG. 10A is a perspective view of a front body of a dryer stand according to an embodiment of the present disclosure;
FIG. 10B is a perspective view of a rear body and an inner body of a dryer stand according to an embodiment of the present disclosure;
FIG. 11 is a perspective view of a base and a supporter of a dryer stand according to an embodiment of the present disclosure;
FIGS. 12A to 12F are views schematically illustrating an air flow path of a dryer stand according to various embodiments of the present disclosure;
FIG. 13 is a bottom view of a dryer stand according to an embodiment of the present disclosure; and
FIG. 14 is a control system diagram of a dryer stand according to an embodiment of the present disclosure.

Exemplary embodiments of the present disclosure are described with reference to the accompanying drawings in detail. The same reference numbers are used throughout the drawings to refer to the same or like parts. Detailed descriptions of well-known functions and structures incorporated herein may be omitted to avoid obscuring the subject matter of the present disclosure.

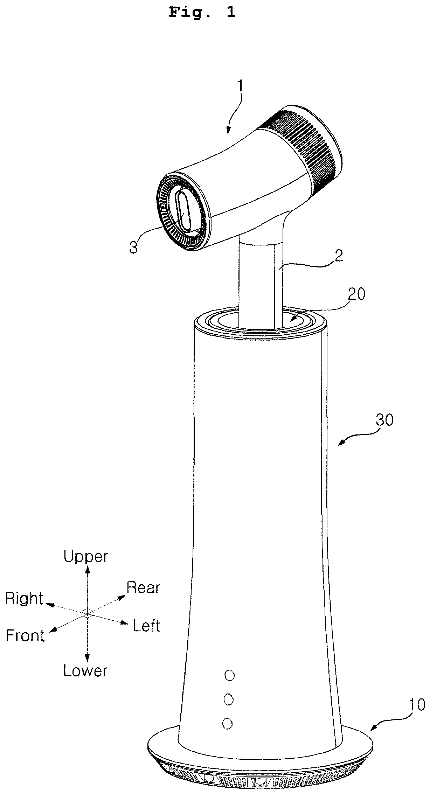

The present disclosure can be described with a three-dimensional coordinate system in which each side shown in FIG. 1 is named front, rear, upper, lower, left, and right.

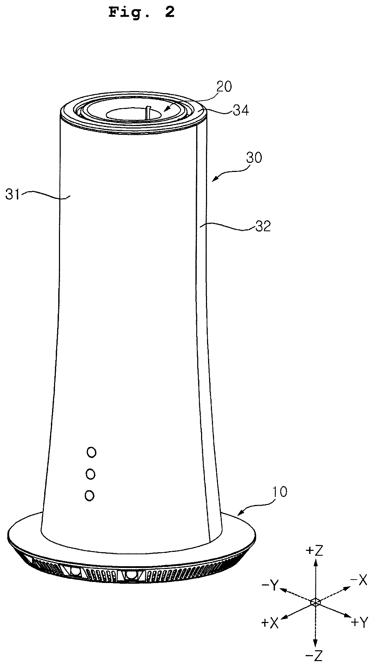

The present disclosure may be described with reference to a spatial orthogonal coordinate system based on X, Y and Z axes that are orthogonal to each other shown in FIG. 2, and the like. In the present specification, the X-axis, the Y-axis, and the Z-axis are defined by setting the vertical direction as the Z-axis direction, and setting the front-rear direction as the X-axis direction. Each axis direction (X-axis direction, Y-axis direction, Z-axis direction) means the both directions in which each axis extends. The symbol "+" in front of each axis direction (+ X-axis direction, +Y-axis direction, +Z-axis direction) means a positive direction which is one of the both directions in which each axis extends. The sign "-" in front of each axis direction (-X-axis direction, -Y-axis direction, -Z-axis direction) means a negative direction which is one of the both directions in which each axis extends.

Hereinafter, a dryer stand according to an embodiment of the present disclosure will be described with reference to FIGS. 1 to 6.

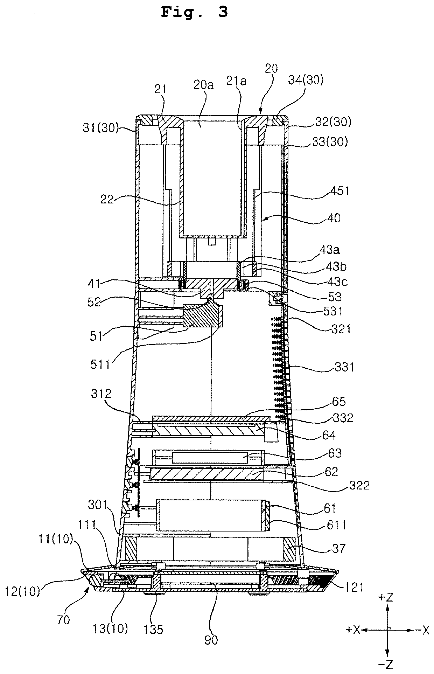

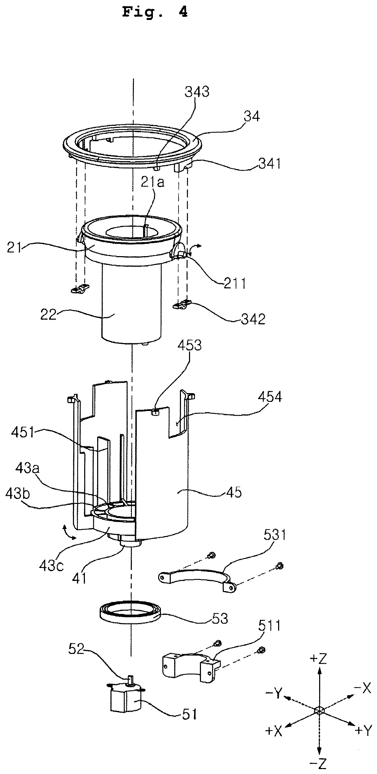

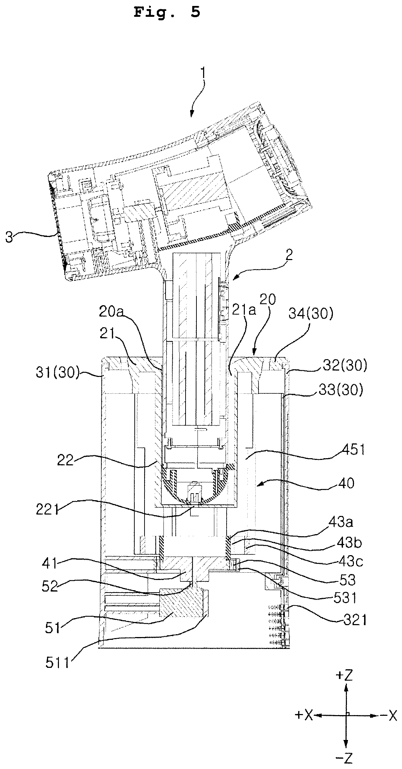

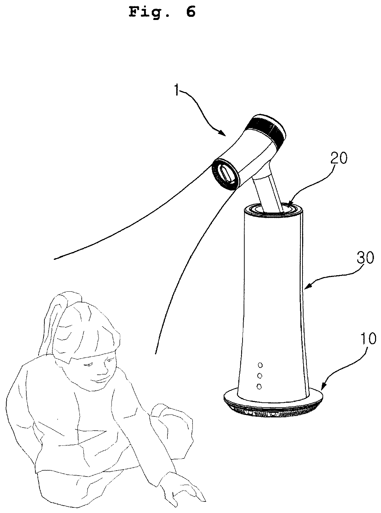

FIG. 1 is a perspective view of a state in which a dryer is mounted in a dryer stand according to an embodiment of the present disclosure, FIG. 2 is a perspective view of a state in which a dryer is not mounted in a dryer stand according to an embodiment of the present disclosure, FIG. 3 is a longitudinal cross-sectional view of a dryer stand according to an embodiment of the present disclosure from the left, FIG. 4 is an exploded perspective view of an upper portion of a dryer stand according to an embodiment of the present disclosure, FIG. 5 is a cross-sectional view of an upper portion showing a state in which a dryer is mounted in a dryer stand according to an embodiment of the present disclosure, and FIG. 6 is a use state diagram in a dryer stand according to an embodiment of the present disclosure.

In the dryer stand (hereinafter, simply, referred to as 'stand') according to an embodiment of the present disclosure, as shown in FIG. 1, a dryer 1 for discharging drying air may be mounted so that a user may perform drying of a drying target without gripping the dryer.

Here, the dryer 1 is an apparatus which performs drying with respect to a drying target, such as a person or a companion animal, by using drying air discharged through a discharge port 3. Meanwhile, as shown in FIG. 5, a rechargeable battery may be built-in the dryer 1, so that user may carry the dryer and perform drying for a drying target

As shown in FIGS. 1 and 2, the stand according to an embodiment of the present disclosure may include a base 10 which is disposed in a lower side and serves as a pedestal, a receptacle 20 in which the dryer 1 is mounted, and a body 30 which is disposed above the base 10 and accommodates the receptacle 20 therein at a certain height in an upward direction from the base 10.

As shown in FIGS. 1 and 2, the dryer 1 may be detachably mounted in the receptacle 20.

As shown in FIG. 2, the body 30 may include an upper body 34 disposed adjacent to an upper side of the receptacle 20, and a side body 31, 32 disposed between the upper body 34 and the base 10.

The side body 31, 32 is a body that form a side shape of the stand, and may include a front body 31 disposed at the front side and a rear body 32 disposed at the rear side.

As shown in FIGS. 1 to 3, the front body 31 and the rear body 32 may be detachably coupled to each other by a plurality of fastening members (not shown). As a fastening method of the front body 31 and the rear body 32 using the fastening member, a screw fastening method, a snap fit fastening method using a snap protrusion-groove, and/or a welding method may be selected.

As described above, when the side body 31, 32 is constituted of the front body 31 and the rear body 32, if it is desired to access the inside of the stand, removing only one of the front body 31 and the rear body 32 is enough, so that repair, replacement, and the like of the internal components of the stand can be easily achieved.

However, in some embodiments, the front body 31 and the rear body 32 may be integrally formed to form a side body as a single member.

As shown in FIGS. 3 and 4, a lower end 301 of the side body 31, 32 may be fitted into a furrow 111 formed in at least a part of an upper end of the base 10. As an example, such a furrow 111 may be formed in a ring shape.

As described above and below, the body 30, in particular, the side body 31, 32 may accommodate the receptacle 20 therein. Further, the components accommodated inside the body 30 such as a rotation motor, a power transmission mechanism, a fan, an air purifier described later may be detachably coupled to the body 30.

That is, the side body 31, 32 may serve as a support or a stem. However, unlike the above, in some embodiments, a stem may be provided separately from the body 30.

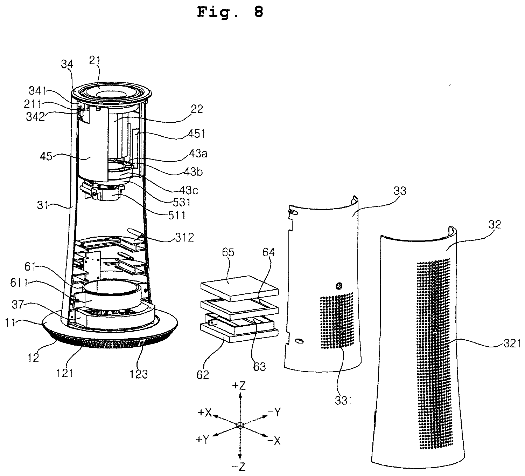

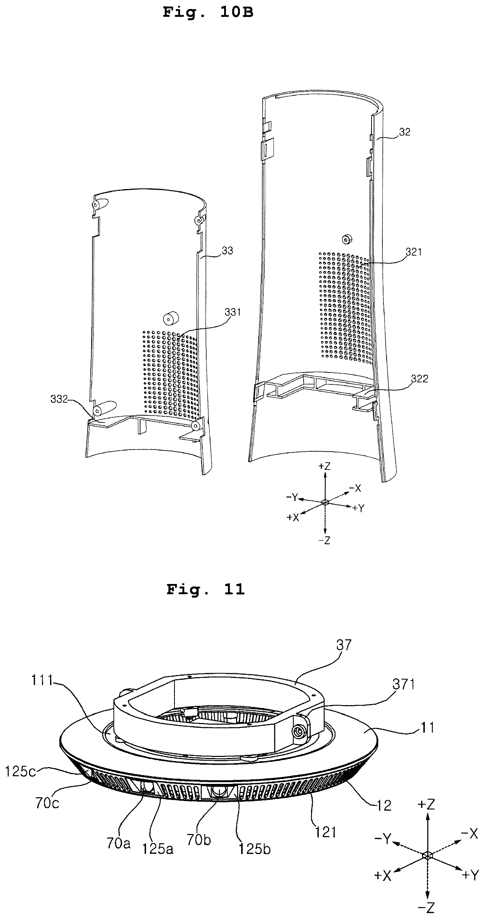

Meanwhile, as shown in FIGS. 8 and 10B, the body 30 may further include an inner body 33, and the inner body 33 may be coupled to the inner surface of a rear body 32.

The inner body 33 may be detachably coupled to the rear body 32 by a screw fastening method, a snap fit fastening method using a snap protrusion-groove, and/or a welding method.

When the inner body 33 is provided, the rear body 32 may be removed from the stand to access the air purifier which requires periodic replacement and management, but it is necessary to remove the rear body 32 and the inner body 33 to access the rotation motor 51, the power transmission mechanism 40, and the receptacle 20 which are other configurations.

As shown in FIGS. 3 and 6, the receptacle 20 is not limited to mounting the dryer 1, but may be implemented to accomplish at least one of the tilting operation and the rotation operation in the left-right direction.

Thus, the air discharge direction of the dryer 1 may be shifted at the same time or at the different time toward the front-rear direction and the left-right direction according to the position and size of a drying target.

In this case, the tilting operation refers to the tilting operation as the rotation in the front-rear direction, that is, the rotation about the Y axis, and the rotation in the left-right direction means the rotation about the Z axis. However, as described above and below, an axis which becomes the center of the tilting operation in response to the rotation in the left-right directions of the receptacle 20 may be changed to any one axis on the XY plane.

As shown in FIGS. 3 to 5, the receptacle 20 includes a tub 21, 22 that forms a groove 20a into which at least part of a grips 2 of the dryer 1 are inserted, and the tubs 21 and 22 may include an upper tub 21 and a lower tub 22.

As shown in FIGS. 3 to 5, the stand according to the embodiment of the present disclosure is a configuration for the tilting operation of the receptacle 20, and may include a tilting pin 211, and a pin mount 341, 342.

The tilting pin 211 may extend toward the outside from the outer surface of the receptacle 20 so that it may become a center of the tilting operation of the receptacle 20. As an example, the tilting pin 211 may be integrally formed on the outer surface of the upper tub 21.

One side of the pin mounts 341 and 342 may be coupled to the upper body 34, and an insertion hole into which the tilting pin 211 is inserted may be formed so that the tilting pin 211 may be rotatably supported.

The receptacle 20 according to the embodiment of the present disclosure may be rotated in the front-rear direction (i.e.., rotated about the Y axis) while the tilting pin 211 is inserted into the insertion hole formed in the pin mount 341, 342, so that the tilting operation can be performed.

As a result, as shown in FIG. 6, the air discharge direction of the dryer 1 mounted in the receptacle 20 may be shifted to the front-rear direction.

As shown in FIGS. 3 to 5, the stand according to the embodiment of the present disclosure is a configuration for rotating operation in the left-right direction of the receptacle 20, and may include a rotation motor 51 and a power transmission mechanism 40.

In this case, the receptacle 20 may be rotated in the left-right direction according to the rotation of the rotation motor 51 in the forward and reverse direction. The power transmission mechanism 40 may mediate the transmission of the power of the rotation motor 51 to the receptacle 20.

The receptacle 20 is coupled to the upper body 34 through the tilting pin 211 and the pin mount 341, 342, and the power transmission mechanism 40 is coupled to the upper body 34, so that the receptacle 20 may be coupled to the power transmission mechanism 40 via the upper body 34. In this case, the upper body 34 may be rotatably supported by the side body 31, 32.

Thus, the power of the rotation motor 51 may be transmitted to the receptacle 20 through the power transmission mechanism 40 and the upper body 34, so that the receptacle 20 can be rotated in the left-right direction according to the rotation of the rotation motor 51 in the forward and reverse direction.

As a result, as shown in FIG. 6, the air discharge direction of the dryer 1 mounted in the receptacle 20 may be shifted to the left-right direction.

As shown in FIG. 4, the power transmission mechanism 40 may have a space, corresponding to the trajectory of the tilting operation of the receptacle 20, partitioned inside thereof, and may have a certain space 454, corresponding to a space where the tilting pin 211 and the pin mount 341 and 342 are disposed, formed at one side thereof.

Thus, the tilting operation and the rotation operation in the left-right direction may be independently performed. As a result, the air discharge direction of the dryer 1 mounted in the receptacle 20 may be shifted at the same time or at the different time in the front-rear direction and the left-right direction.

The present disclosure not limited to rotating the receptacle 20 mounting the dryer 1, but is devised to provide a stand for purifying indoor air by removing odors such as companion animal smell or elderly person's odor, and removing harmful substances suspended in the air.

To this end, as shown in FIG. 3, the stand may be provided with an air purifier, and a detailed description thereof will be described later.

Hereinafter, with reference to FIGS. 1 to 14, a configuration for purifying indoor air among the configurations of a stand according to an embodiment of the present disclosure and a configuration related thereto will be described in detail.

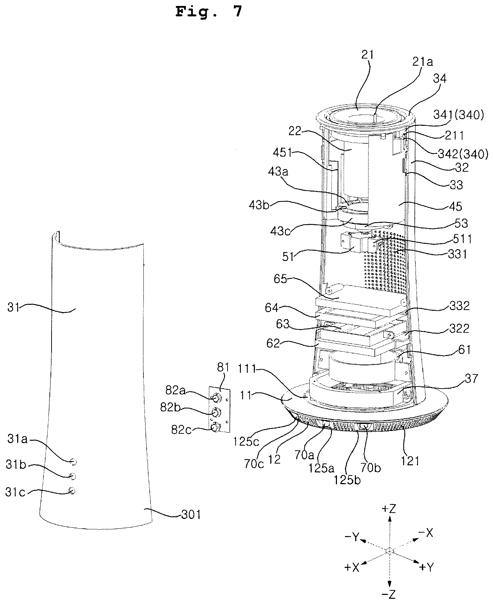

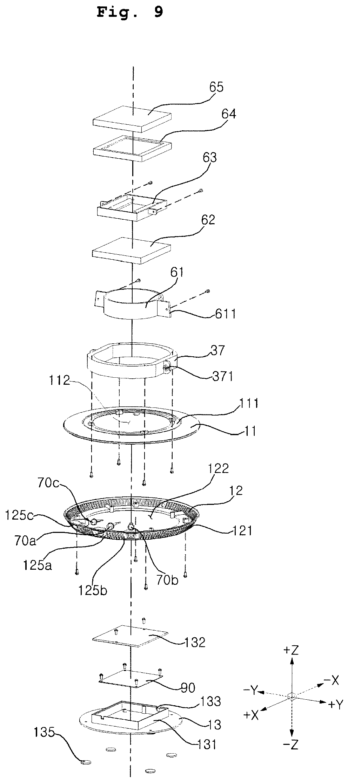

FIG. 7 is a front exploded perspective view of a dryer stand according to an embodiment of the present disclosure, FIG. 8 is a rear exploded perspective view of a dryer stand according to an embodiment of the present disclosure, FIG. 9 is an exploded perspective view of the lower part of a dryer stand according to an embodiment of the present disclosure.

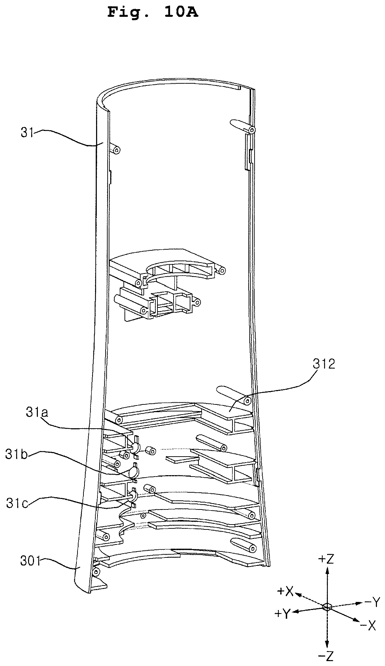

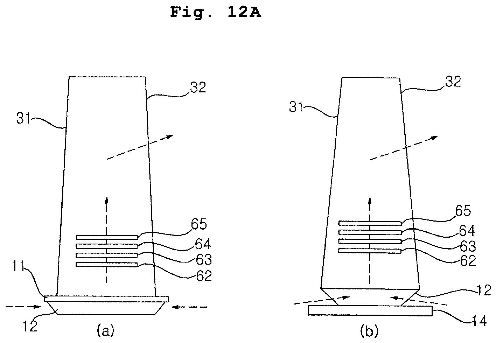

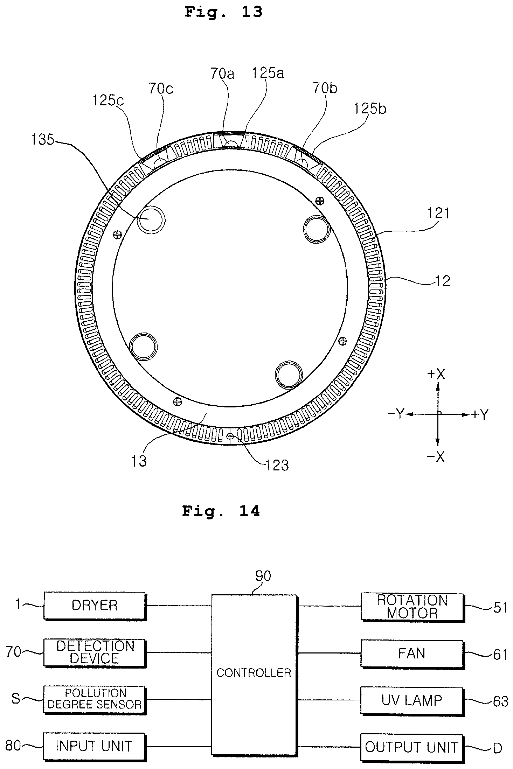

FIG. 10A is a perspective view of a front body of a dryer stand according to an embodiment of the present disclosure, FIG. 10B is a perspective view of a rear body and an inner body of a dryer stand according to an embodiment of the present disclosure, FIG. 11 is a perspective view of a base and a supporter of a dryer stand according to an embodiment of the present disclosure, FIGS. 12A to 12F are views schematically illustrating an air flow path of a dryer stand according to various embodiments of the present disclosure, FIG. 13 is a bottom view of a dryer stand according to an embodiment of the present disclosure, and FIG. 14 is a control system diagram of a dryer stand according to an embodiment of the present disclosure.

As shown in FIGS. 7 to 9, the stand according to an embodiment of the present disclosure may include the base 10, the receptacle 20, the body 30, a fan 61, and the air purifier.

The fan 61 may cause a flow of air introduced into the body 30 and discharged to the outside. The fan 61 may be provided with various means and configurations that can cause the above mentioned flow of air, such as centrifugal, four-flow, and axial fan.

The fan 61 may flow air from the lower side toward the upper side.

The air purifier may be disposed spaced apart from the fan 61 toward the upper side by a certain distance.

The air purifier may include a HEPA filter 62, an ultraviolet generator 63, a photocatalyst filter 64, a carbon filter 65, and the fan 61.

Meanwhile, in FIGS. 7 to 9, the HEPA filter 62, the ultraviolet generator 63, the photocatalyst filter 64, and the carbon filter 65 are sequentially disposed from the lower side toward the upper side, but not limited to such a disposition order.

That is, in addition to the embodiment having all of the HEPA filter 62, the ultraviolet generator 63, the photocatalyst filter 64, and the carbon filter 65, it should be noted that a combination of some of them or an embodiment having other filters such as antibacterial filter, a deodorizing filter may also be available.

The HEPA filter 62 is an air filter, and is a filter that can remove fine particles such as dust, mites carcasses, pollen, tobacco smoke (particles), floating fungi, animal hair, and the like as well as fine dust floating with air.

The ultraviolet generator 63 may be constituted of an ultraviolet light emitting diode (UV LED) or an ultraviolet (UV) lamp. The ultraviolet generator 63 may sterilize bacteria or microorganisms suspended in the air by irradiating ultraviolet light.

The photocatalyst filter 64 may decompose harmful substances by a photochemical reaction to perform removing function (that is, deodorizing function) of a companion animal odor or an old man odor. The photocatalyst filter 64 may be formed of a breathable adsorption base material for adsorbing harmful substances in the air, a photocatalyst attached to the breathable adsorption base material, and a cocatalyst for activating the photocatalyst.

In this case, the ultraviolet generator 63 may serve as a light source for activating the photocatalyst provided in the photocatalyst filter 64. Alternatively, in some embodiments, a light emitting module for activating the photocatalyst may be provided separately from the ultraviolet generator 63.

The carbon filter 65 is a filter that can remove odors and harmful gases contained in the air through a chemical adsorption method using activated carbon.

As shown in FIG. 7 and FIG. 8, the inflow of air by the fan 61 may be accomplished through a suction hole 121 formed in the side surface of the base 10, and the discharge of air may be accomplished by the fan 61 through a discharge hole 321 formed in the rear body 32.

The HEPA filter 62, the ultraviolet generator 63, the photocatalyst filter 64, and the carbon filter 65 may be disposed on a flow path of air introduced into the suction hole 121 by the fan 61 and discharged to the discharge hole 321. Thus, the air may be discharged to the outside of the body 30 while various harmful substances, odors, and the like contained in the air introduced into the body 30 are removed.

As shown in FIGS. 7 to 9 and 11, the base 10 may include an upper base 11, a middle base 12, and a lower base 13.

The upper base 11 may be provided with a body 30 installed in the upper side. As shown in FIG. 7 and FIG. 11, a lower end portions 301 of the side body 31, 32 may be fitted into the furrow 111 formed in at least part of an upper end portion of the upper base 10.

The middle base 12 may be coupled to the lower side of the upper base 11, and the lower base 13 may be coupled to the lower side of the middle base 12.

As an example, as shown in FIG. 9, the upper base 11, the middle base 12, and the lower base 13 may be coupled to each other by screwing.

In the middle base 12, a suction hole 121 through which air sucked into the body 30 by the fan 61 may be formed.

In this case, the suction hole 121 may be a plurality of suction holes that are formed in the side surface of the middle base 12, and spaced apart from each other at a certain interval. Thus, in comparison with the case where the suction hole 121 is formed of a single hole having a relatively large diameter, it is possible to prevent foreign substances such as hair of the companion animal and dust from being sucked into the body 30.

As shown in FIGS. 7, 8 and 11, the middle base 12 may be formed inclined toward the inner side as it progresses from the upper end to the lower end.

Thus, liquid such as water falling toward the floor (e.g., water falling toward the floor from the hair of drying target) can be prevented from flowing into the stand through the suction hole 121.

Meanwhile, according to the embodiment, the stand may further include a filter that is installed in the inner surface of the middle base 12 to filter the foreign matter sucked with the air through the suction hole 121.

As shown in (b) of FIG. 12A, the base 10 may further include a base plate 14 that is coupled to the lower side of the lower base 13, and is formed to have a width greater than the width of the upper base 11, the middle base 12, the lower base 13, and the body 30.

The base plate 14 may serve as a pedestal to more firmly mount the stand on the ground.

As shown in FIG. 9, a controller 90 for controlling the operation of the fan 61 and the air purifier may be installed on the lower base 13.

The controller 90 may be accommodated inside a control box 131, 132 installed on the lower base 13. In one side of the control box 131, 132, a hole 133 through which a cable for applying power to the controller 90, and other components that require power passes may be formed.

The controller 90 may be disposed on a flow path of air passed through the suction hole 121, and thus heat generated in the controller 90 may be effectively removed.

As shown in FIGS. 7 and 10B, the side body 31, 32 may be provided with a discharge hole 321 through which the air discharged to the outside of the body 30 by the fan 61 passes. For example, the discharge hole 321 may be formed in the rear body 32.

In this case, the discharge hole 321 may be a plurality of discharge holes that are formed in the side surface of the rear body 32 and spaced apart from each other by a certain interval. Thus, in comparison with the case where the discharge hole 321 is formed of a single hole having a relatively large diameter, the discharge noise of the air can be reduced, and the air volume can be prevented from being concentrated on a certain point behind the stand.

Meanwhile, as shown in FIGS. 8 and 10B, when the body 30 further includes the above inner body 33, the inner body 33 may have a discharge hole 331 through which the air discharged to the outside of the body 30 by the fan 61 passes. Thus, the air purified by passing through the air purifier by the fan 61 may be discharged to the outside through the discharge hole 331 of the inner body 33 and the discharge hole 321 of the rear body 32 in order.

As shown in FIGS. 7, 8, 10A, and 10B, the air purifier configured as described above may be detachably coupled to the side body 31, 32.

To this end, the side body 31, 32 may extend from the inner side surface toward the inner side to form a guide rib 312, 322 supporting the air purifier.

The guide rib 312, 322 may be formed in a shape corresponding to at least a part of an outer surface of the air purifier and may be in surface contact with the air purifier to support the air purifier.

Meanwhile, as shown in FIGS. 8 and 10B, when the body 30 further includes the inner body 33, the guide rib 332 is formed in the inner body 33 to support the air purifier.

That is, the air purifier may be seated and coupled to a plurality of guide ribs 312 formed in the inner surface of the front body 31, a plurality of guide ribs 322 formed in the inner surface of the rear body 32, and the guide rib 332 formed in the inner surface of the inner body 33 to be fixed in a preset position.

Such a guide rib 312, 322, 332 may guide the coupling of the air purifier to the body 30, and may easily separate the air purifier from the body 30 when replacement and repair are needed later.

Meanwhile, according to the embodiment, the air purifier may include a separate fastening member (e.g., screwing member) for coupling to the side body 31, 32 and/or the inner body 33, in addition to the guide rib 312, 322, 332.

As shown in FIG. 11, the stand according to an embodiment of the present disclosure may further include a supporter 37 in the lower side in order to prevent the risk of overturning due to collision with the infant or companion animal.

The supporter 37 may be provided in the upper side of the base 10, and at least a part of the outer surface is in close contact with the inner surface of the side body 31, 32, so that not only the function of preventing the above mentioned overturning but also the coupling to the base 10 of the side body 31, 32 can be more firmly achieved.

As described above, the stand according to the embodiment of the present disclosure may include a controller 90.

The controller 90 may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and electrical units for performing other functions.

As shown in FIG. 13, the controller 90 may control the operation of the rotation motor 51. The controller 90 may automatically control the rotation operation of the receptacle 20 in the left-right direction by adjusting the rotation direction and the rotation angle of the rotation motor 51 based on the information on the drying target (e.g., information on the position and size of the drying target) detected by a detection device 70.

Here, the detection device 70, as shown in FIG. 8, may be accommodated in the base 10 and may detect the position and size of the drying target, such as infant or companion animal, adjacent to the stand and, for example, may be an infrared sensor.

As shown in FIG. 13, the controller 90 may receive information on pollution degree of the ambient air from a pollution degree sensor S provided in the stand, and may control whether the fan 61 and/or the ultraviolet generator 63 (e.g., a UV lamp) operates depending on the degree of pollution.

As shown in FIG. 7, the input unit 80 may include a button housing 81 and a plurality of buttons 82a, 82b, and 82c installed in the button housing 81, and each of the plurality of buttons 82a, 82b, and 82c may include a first button 82a, a second button 82b, and a third button 82c that perform a different function.

As shown in FIGS. 7 and 10A, the input unit 80 may be detachably coupled to the front body 31 by a screwing method, or the like. The front body 31 may be formed with a plurality of button holes 31a, 31b, 31c into which each of the plurality of buttons 82a, 82b, and 82c is inserted. Thus, a plurality of buttons 82a, 82b, and 82c are partially exposed on the front surface of the front body 31 so that the user can operate the button.

As an example, the first button 82a is a button for rotating the receptacle 20 in the left-right direction, and may be a button for issuing a signal to the controller 90 to control the rotation direction and the rotation angle of the rotation motor 51. To this end, the controller 90 may be electrically connected to the first button 82a and the rotation motor 51.

For example, the second button 82b is a button for discharging hot air or lukewarm air from the discharge port 3 of the dryer 1 mounted in the receptacle 20, and may be a button for issuing a signal to the controller 90 to control the operation of the heater that heats the air introduced into the dryer 1. To this end, the controller 90 may be electrically connected to the second button 82b and the heater of the dryer 1.

As an example, the third button 82c is a button for purifying indoor air through the air purifier, and may be a button for issuing a signal to the controller 90 to control the operation of the fan 61 and the ultraviolet generator 63. To this end, the controller 90 may be electrically connected to the third button 82c, the fan 61, and the ultraviolet generator 63.

According to the embodiment, when the discharge port 3 of the dryer 1 is rotatably provided by a discharge port rotation motor built in the dryer 1, the stand may further include a fourth button 82d.

In this case, the fourth button 82d may be a button for rotating the discharge port 3, and may be a button that issues a signal to the controller 90 to control the rotation of the discharge port rotation motor. To this end, the controller 90 may be electrically connected to the fourth button 82d and the discharge port rotation motor.

The number of buttons provided in the input unit 80 described above and the function of each button are just an example, and are not limited thereto.

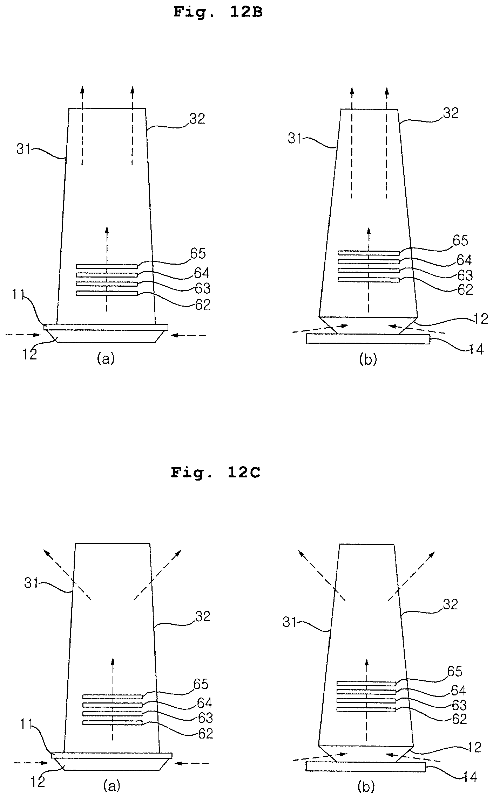

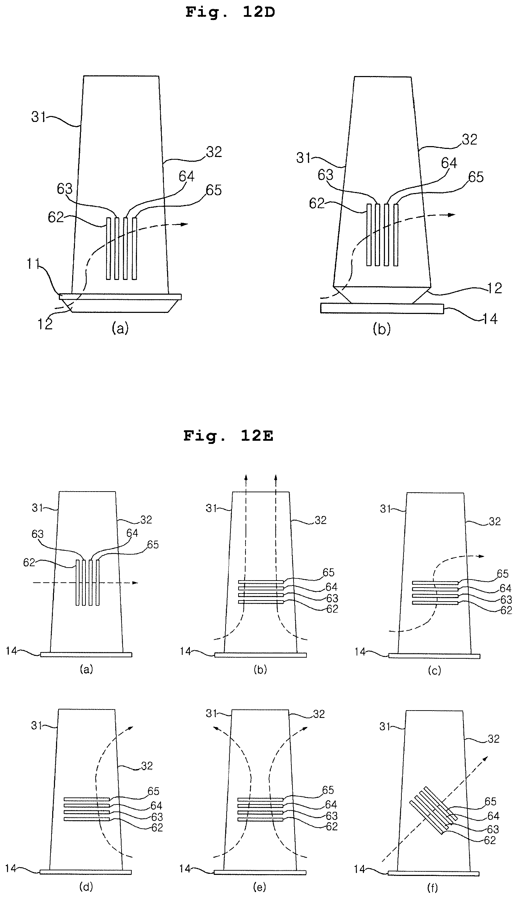

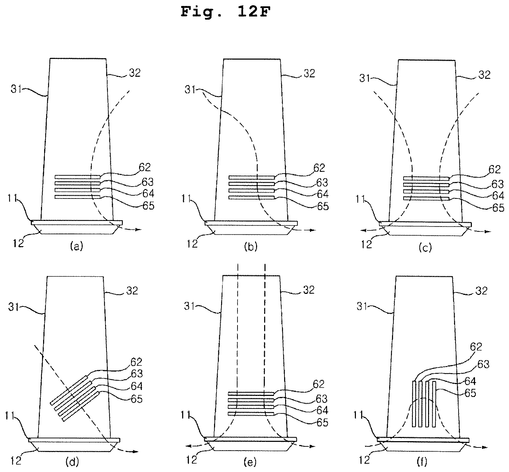

As shown in FIGS. 8 and 12, the stand according to an embodiment of the present disclosure may supply power to a configuration that requires power, such as the rotation motor 51, the fan 61, the ultraviolet generator 63, and the controller 90 through a power cable penetrating a power supply hole 123 formed in one side of the base 10.

In addition, according to an embodiment, a separate battery is built in the stand to apply power to a configuration that requires power among the configurations of the stand, and such a battery may be charged by an external power source applied through the power cable.

The battery built in the dryer 1 mounted in the receptacle 20 may be charged through an external power source applied through the power cable and an electrode terminal passing through the terminal hole 221.

As shown in FIG. 13, the stand according to the embodiment of the present disclosure may include an output unit (D).

The output unit D is a configuration for displaying to the user whether the function performed in the stand is operated and, although not shown in the drawing, may be implemented as a display in a part of the body 30.

The output unit D may display information such as the remaining power of the battery built in the dryer 1, the discharge of hot air or lukewarm air from the discharge port 3 of the dryer 1, the rotation operation of the discharge port of the dryer 1, the tilting or rotation angle in the left-right direction of the receptacle 20, the pollution degree of ambient air, and operation of the air purifier.

As shown in FIG. 12, the stand according to the embodiment of the present disclosure may be provided with a plurality of pads 135 on the bottom surface of the stand in order to prevent it from deviating from the installation position due to sliding on the ground or colliding with the drying target.

Among the configuration of the stand described above, the disposition of the air purifier and the flow path of air passed through the air purifier may be simplified as shown in (a) of FIG. 12A. Hereinafter, those will be named as a disposition of air purifier and an air flow path according to a first embodiment.

Hereinafter, unlike the first embodiment described above, an embodiment in which an air purifier is disposed or an air flow path is formed will be described with reference to FIGS. 12A to 12F.

As shown in (a) of FIG. 12A, in the first embodiment, the fan 61 flows air from the lower side toward the upper side, and the plurality of air purifiers may be disposed from the lower side toward the upper side. In this case, a flow path of air passed through the air purifier may be formed between the suction hole 121 formed in the middle base 12 and the discharge hole 321 formed in the rear body 32.

As shown in (a) of FIG. 12B, in a second embodiment, the fan 61 flows air from the lower side toward the upper side, and the plurality of air purifiers may be disposed from the lower side toward the upper side. In this case, a flow path of air passed through the air purifier may be formed between the suction hole 121 formed in the middle base 12, and the discharge hole formed between the upper body 34 and the receptacle 20.

As shown in (a) of FIG. 12C, in a third embodiment, the fan 61 flows air from the lower side toward the upper side, and the plurality of air purifiers may be disposed from the lower side toward the upper side. In this case, a flow path of air passed through the air purifier may be formed between the suction hole 121 formed in the middle base 12, and the discharge hole formed in each of the front body 31 and the rear body 32.

As shown in (a) of FIG. 12D, in a fourth embodiment, the fan 61 flows air from the left side toward the right side (or alternatively from the right side toward the left side), and the plurality of air purifiers may be disposed from the left side toward the right side. In this case, a flow path of air passed through the air purifier may be formed between the suction hole 121 formed in the middle base 12 and the discharge hole 321 formed in the rear body 32.

Meanwhile, as shown in each of (b) of FIG. 12A, (b) of FIG. 12B, (b) of 12C, 12D, and (b) of 12D, in each of the above-described first to fourth embodiments, an example of further including a base plate 14 may be implemented.

Unlike the above, the upper base 11, the middle base 12, and the lower base 13 are omitted, while only the base plate 14 is provided, and the disposition of the air purifier implemented in the stand having the suction hole formed in the body 30 and the air flow path are shown in FIG. 12E.

As shown in (a) of FIG. 12E, in a fifth embodiment, the fan 61 flows air from the front side toward the rear side, and the plurality of air purifiers may be disposed from the front side toward the rear side. In this case, a flow path of air passed through the air purifier may be formed between the suction hole formed in the front body 31 and the discharge hole formed in the rear body 32.

As shown in (b) of FIG. 12E, in a sixth embodiment, the fan 61 flows air from the lower side toward the upper side, and the plurality of air purifiers may be disposed from the lower side toward the upper side. In this case, a flow path of air passed through the air purifier may be formed between the suction hole formed in each of the front body 31 and the rear body 32, and the discharge hole formed between the upper body 34 and the receptacle 20.

As shown in (c) of FIG. 12E, in a seventh embodiment, the fan 61 flows air from the lower side toward the upper side, and the plurality of air purifiers may be disposed from the lower side to toward the upper side. In this case, a flow path of air passed through the air purifier may be formed between the suction hole formed in the front body 31 and the discharge hole formed in the rear body 32.

As shown in (d) of FIG. 12E, in an eighth embodiment, the fan 61 flows air from the lower side toward the upper side, and the plurality of air purifiers may be disposed from the lower side toward the upper side. In this case, a flow path of air passed through the air purifier may be formed between the suction hole formed in the rear body 32 and the discharge hole formed in the rear body 32.

As shown in (e) of FIG. 12E, in a ninth embodiment, the fan 61 flows air from the lower side toward the upper side, and the plurality of air purifiers may be disposed from the lower side toward the upper side. In this case, a flow path of air passed through the air purifier is formed between the suction hole formed in each of the front body 31 and the rear body 32 and the discharge hole formed in each of the front body 31 and the rear body 32.

As shown in (f) of FIG. 12E, in a tenth embodiment, the fan 61 flows air from the front lower side toward the rear upper side, and the plurality of air purifiers may be disposed from the front lower side toward the rear upper side. In this case, a flow path of air passed through the air purifier may be formed between the suction hole formed in the front body 31 and the discharge hole formed in the rear body 32.

Unlike the above, the upper base 11, the middle base 12, and the lower base 13 are provided, and the disposition and the air flow path of the air purifier implemented in the stand having the discharge hole formed in the middle base 12 are shown in FIG. 12F.

As shown in (a) of FIG. 12F, in an eleventh embodiment, the fan 61 flows air from the upper side toward the lower side, and the plurality of air purifiers may be disposed from the upper side toward the lower side. In this case, a flow path of air passed through the air purifier may be formed between the suction hole formed in the rear body 32 and the discharge hole formed in the middle base 12.

As shown in (b) of FIG. 12F, in a twelfth embodiment, the fan 61 flows air from the upper side toward the lower side, and the plurality of air purifiers may be disposed from the upper side toward the lower side. In this case, a flow path of air passed through the air purifier may be formed between the suction hole formed in the front body 31 and the discharge hole formed in the middle base 12.

As shown in (c) of FIG. 12F, in a thirteenth embodiment, the fan 61 flows air from the upper side toward the lower side, and the plurality of air purifiers may be disposed from the upper side toward the lower side. In this case, a flow path of air passed through the air purifier may be formed between the suction hole formed in each of the front body 31 and the rear body 32, and the discharge hole formed in each of the front and rear of the middle base 12.

As shown in (d) of FIG. 12F, in a fourteenth embodiment, the fan 61 flows air from the front upper side toward the rear lower side, and the plurality of air purifiers may be disposed from the front upper side to the rear lower side. In this case, a flow path of air passed through the air purifier may be formed between the suction hole formed in the front body 31 and the discharge hole formed in the middle base 12.

As shown in (e) of FIG. 12F, in a fifteenth embodiment, the fan 61 flows air from the upper side toward the lower side, and the plurality of air purifiers may be disposed from the upper side toward the lower side. In this case, a flow path of air passed through the air purifier may be formed between the suction hole formed between the upper body 34 and the receptacle 20, and the discharge hole formed in each of the front and rear of the middle base 12.

As shown in (f) of FIG. 12F, in a sixteenth embodiment, the fan 61 flows air from the front side toward the rear side, and the plurality of air purifiers may be disposed from the front side toward the rear side. In this case, a flow path of air passed through the air purifier may be formed between the suction hole formed in the front side of the middle base 12 and the discharge hole formed in the rear side of the middle base 12.

The stand according to an embodiment of the present disclosure described through the first to sixteenth embodiments may increase the air purification rate while minimizing the volume occupied by the air purifier inside the stand.

According to the present disclosure, there are one or more of the following effects.

First, since the dryer is mounted in the receptacle, the user can dry the drying target without holding the dryer.

Second, since the air purifier is provided, the indoor air can be purified separately from the mounting of the dryer.

Third, the air purifier is disposed in the flow path of the air flown by the fan, thereby increasing the air purification rate while minimizing the volume occupied by the air purifier inside the stand.

Fourth, the side surface of the base on which the suction hole is formed is inclined toward the inner side as it progresses from the upper end to the lower end, thereby preventing liquid such as water falling toward the bottom from being introduced into the stand through the suction hole.

Fifth, the controller is disposed in the flow path of air flown by the fan, thereby effectively removing the heat generated by the controller.

## Claims

1. A dryer stand comprising:
a base (10) which is disposed in a lower side of the dryer stand;
a receptacle (20) in which a dryer for discharging drying air can be mounted; and
a body (30) which is disposed above the base (10) and accommodates the receptacle (20) therein at a certain height in an upward direction from the base (10),
**characterized in that** the dryer stand further comprises:
an air purifier disposed in the body (30), and
a fan (61) positioned in the body (30) to suck air into the body (30) and to cause the sucked air to pass through the air purifier and be discharged to the outside of the dryer stand,
wherein the base (10) or the body (30) is provided with a suction hole (121) through which air sucked into the body (30) by the fan (61) passes.

2. The dryer stand of claim 1, wherein the base comprises:
an upper base (11) having an upper side on which the body (30) is installed;
a middle base (12) coupled to a lower side of the upper base (11); and
a lower base (13) coupled to a lower side of the middle base (12).

3. The dryer stand of claim 2, wherein the middle base (12) has a side surface on which the suction hole (121) is formed,
wherein the suction hole (121) is a plurality of suction holes that are respectively spaced apart from each other.

4. The dryer stand of claim 3, wherein the side surface of the middle base (12) is inclined toward an inner side as it progresses from an upper end thereof to a lower end thereof.

5. The dryer stand of any one of claims 1 to 4, further comprising a controller (90) which controls the operation of the fan and the air purifier.

6. The dryer stand of claim 5, insofar as depending on claim 2, wherein the controller (90) is installed in the lower base (13), and is disposed in a flow path of air passed through the suction hole (121).

7. The dryer stand of any one of claims 1 to 6, wherein the body (30) comprises:
an upper body (34) which is disposed adjacent to an upper portion of the receptacle (20); and
a side body (31, 32) which is disposed between the upper body (34) and the base (10).

8. The dryer stand of claim 7, wherein the fan (61) is arranged to flow air from a lower side thereof toward an upper side thereof,
wherein the air purifier is a plurality of air purifiers that are respectively spaced apart from each other along a vertical direction of the dryer stand.

9. The dryer stand of claim 7 or 8, wherein a discharge hole (321) through which air discharged to the outside of the body by the fan (61) passes is formed in the side body (31, 32).

10. The dryer stand of claim 7 or 8, wherein a discharge hole (321) through which air discharged to the outside of the body by the fan (61) passes is formed between the upper body (34) and the receptacle (20).

11. The dryer stand of claim 7, wherein the fan (61) is arranged to flow air from one of a left side thereof and a right side thereof to the other,
wherein the air purifier is a plurality of air purifiers that are respectively spaced apart from each other along a horizontal direction of the dryer stand.

12. The dryer stand of claim 11, wherein a discharge hole (321) through which air discharged to the outside of the body by the fan (61) passes is formed in the side body (31, 32).

13. The dryer stand of claim 1, wherein a discharge hole (321) through which air discharged to the outside of the body by the fan (61) passes is formed in the body (30).

14. The dryer stand of claim 1, wherein a discharge hole (321) through which air discharged to the outside of the body by the fan (61) passes is formed between the body (30) and the receptacle (20).

15. The dryer stand of claim 1, wherein a discharge hole (321) through which air discharged to the outside of the body (30) by the fan (61) passes is formed in the base(10).

## Patentansprüche

1. Trocknerständer mit:
einer Basis (10), die in einer Unterseite des Trocknerständers angeordnet ist;
einer Aufnahme (20), in der ein Trockner zum Ausstoßen von Trocknungsluft angebracht werden kann; und
einem Körper (30), der über der Basis (10) angeordnet ist und die Aufnahme (20) darin in einer bestimmten Höhe in einer Richtung nach oben von der Basis (10) aufnimmt,
**dadurch gekennzeichnet, dass** der Trocknerständer ferner aufweist:
einen Luftreiniger, der im Körper (30) angeordnet ist, und
einen Ventilator (61), der im Körper (30) angeordnet ist, um Luft in den Körper (30) zu saugen und zu bewirken, dass die angesaugte Luft durch den Luftreiniger strömt und zum Äußeren des Trocknerständers ausgestoßen wird,
wobei die Basis (10) oder der Körper (30) mit einem Ansaugloch (121) versehen sind, durch das durch den Ventilator (61) in den Körper (30) angesaugte Luft strömt.

2. Trocknerständer nach Anspruch 1, wobei die Basis aufweist:
eine obere Basis (11) mit einer Oberseite, auf der der Körper (30) installiert ist;
eine mittlere Basis (12), die mit einer Unterseite der oberen Basis (11) gekoppelt ist; und
eine untere Basis (13), die mit einer Unterseite der mittleren Basis (12) gekoppelt ist.

3. Trocknerständer nach Anspruch 2, wobei die mittlere Basis (12) eine Seitenfläche aufweist, an der das Ansaugloch (121) ausgebildet ist,
wobei das Ansaugloch (121) aus mehreren Ansauglöchern besteht, die jeweils voneinander beabstandet sind.

4. Trocknerständer nach Anspruch 3, wobei der Seitenfläche der mittleren Basis (12) beim Fortschreiben von deren oberen Ende zu deren unteren Ende zu einer Innenseite geneigt ist.

5. Trocknerständer nach einem der Ansprüche 1 bis 4, der ferner eine Steuereinheit (90) aufweist, die den Betrieb der des Ventilators und des Luftreinigers steuert.

6. Trocknerständer nach Anspruch 5, insoweit von Anspruch 2 abhängig, wobei die Steuereinheit (90) in der unteren Basis (13) installiert ist und in einem Strömungsweg der Luft angeordnet ist, die durch das Ansaugloch (121) strömt.

7. Trocknerständer nach einem der Ansprüche 1 bis 6, wobei der Körper (30) aufweist:
einen oberen Körper (34), der benachbart zu einem oberen Abschnitt der Aufnahme (20) angeordnet ist; und
einen Seitenkörper (31, 32), der zwischen dem oberen Körper (34) und der Basis (10) angeordnet ist.

8. Trocknerständer nach Anspruch 7, wobei der Ventilator (61) angeordnet ist, Luft von dessen Unterseite zu dessen Oberseite strömen zu lassen, wobei der Luftreiniger aus mehreren Luftreinigern besteht, die jeweils längs einer vertikalen Richtung des Trocknerständers voneinander beabstandet sind.

9. Trocknerständer nach Anspruch 7 oder 8, wobei ein Ausstoßloch (321), durch das Luft strömt, die durch den Ventilator (61) zur Außenseite des Körpers ausgestoßen wird, im Seitenkörper (31, 32) ausgebildet ist.

10. Trocknerständer nach Anspruch 7 oder 8, wobei ein Ausstoßloch (321), durch das Luft strömt, die durch den Ventilator (61) zur Außenseite des Körpers ausgestoßen wird, zwischen dem oberen Körper (34) und der Aufnahme (20) ausgebildet ist.

11. Trocknerständer nach Anspruch 7, wobei der Ventilator (61) angeordnet ist, um Luft von dessen linken Seite und dessen rechten Seite zur anderen strömen zu lassen,
wobei der Luftreiniger aus mehreren Luftreinigern besteht, die jeweils längs einer horizontalen Richtung des Trocknerständers voneinander beabstandet sind.

12. Trocknerständer nach Anspruch 11, wobei ein Ausstoßloch (321), durch das Luft strömt, die durch den Ventilator (61) zur Außenseite des Körpers ausgestoßen wird, im Seitenkörper (31, 32) ausgebildet ist.

13. Trocknerständer nach Anspruch 1, wobei ein Ausstoßloch (321), durch das Luft strömt, die durch den Ventilator (61) zur Außenseite des Körpers ausgestoßen wird, im Körper (30) ausgebildet ist.

14. Trocknerständer nach Anspruch 1, wobei ein Ausstoßloch (321), durch das Luft strömt, die durch den Ventilator (61) zur Außenseite des Körpers ausgestoßen wird, zwischen dem Körper (30) und der Aufnahme (20) ausgebildet ist.

15. Trocknerständer nach Anspruch 1, wobei ein Ausstoßloch (321), durch das Luft strömt, die durch den Ventilator (61) zur Außenseite des Körpers (30) ausgestoßen wird, in der Basis (10) ausgebildet ist.

## Revendications

1. Support de séchoir, comprenant :
une base (10) disposée sur le bas du support de séchoir ;
un réceptacle (20) où un séchoir refoulant de l'air de séchage peut être monté ; et
un corps (30) disposé au-dessus de la base (10) et où logé le réceptacle (20) à une certaine hauteur au-dessus de la base (10),
**caractérisé en ce que** ledit support de séchoir comprend en outre :
un purificateur d'air disposé dans le corps (30), et
un ventilateur (61) disposé dans le corps (30) pour aspirer de l'air dans le corps (30) et forcer l'air aspiré à traverser le purificateur d'air et à être refoulé vers l'extérieur du support de séchoir,
où la base (10) ou le corps (30) présentent un trou d'aspiration (121) par où passe l'air aspiré dans le corps (30) par le ventilateur (61).

2. Support de séchoir selon la revendication 1, où la base comprend :
une base supérieure (11) sur le dessus de laquelle le corps (30) est installé ;
une base centrale (12) raccordée au bas de la base supérieure (11) ; et
une base inférieure (13) raccordée au bas de la base centrale (12).

3. Support de séchoir selon la revendication 2, où la base centrale (12) a une surface latérale sur laquelle le trou d'aspiration (121) est formé,
le trou d'aspiration (121) étant constitué d'une pluralité de trous d'aspiration espacés l'un de l'autre.

4. Support de séchoir selon la revendication 3, où la surface latérale de la base centrale (12) est de plus en plus inclinée vers l'intérieur de son extrémité supérieure à son extrémité inférieure.

5. Support de séchoir selon l'une des revendications 1 à 4, comprenant en outre un contrôleur (90) commandant le fonctionnement du ventilateur et du purificateur d'air.

6. Support de séchoir selon la revendication 5, si dépendante de la revendication 2, où le contrôleur (90) est monté dans la base inférieure (13), et est disposé sur le trajet d'écoulement de l'air passant par le trou d'aspiration (121).

7. Support de séchoir selon l'une des revendications 1 à 6, où le corps (30) comprend :
un corps supérieur (34) disposé de manière adjacente à une partie supérieure du réceptacle (20) ; et
un corps latéral (31, 32) disposé entre le corps supérieur (34) et la base (10).

8. Support de séchoir selon la revendication 7, où le ventilateur (61) est prévu pour souffler de l'air du bas vers le haut,
où le purificateur d'air est constitué d'une pluralité de purificateurs d'air espacés l'un de l'autre dans la direction verticale du support de séchoir.

9. Support de séchoir selon la revendication 7 ou la revendication 8, où un trou de refoulement (321) par où passe l'air refoulé vers l'extérieur du corps par le ventilateur (61) est formé dans le corps latéral (31, 32).

10. Support de séchoir selon la revendication 7 ou la revendication 8, où un trou de refoulement (321) par où passe l'air refoulé vers l'extérieur du corps par le ventilateur (61) est formé entre le corps supérieur (34) et le réceptacle (20).

11. Support de séchoir selon la revendication 7, où le ventilateur (61) est prévu pour souffler de l'air de son côté gauche ou droit vers l'autre côté,
où le purificateur d'air est constitué d'une pluralité de purificateurs d'air espacés l'un de l'autre dans la direction horizontale du support de séchoir.

12. Support de séchoir selon la revendication 11, où un trou de refoulement (321) par où passe l'air refoulé vers l'extérieur du corps par le ventilateur (61) est formé dans le corps latéral (31,32).

13. Support de séchoir selon la revendication 1, où un trou de refoulement (321) par où passe l'air refoulé vers l'extérieur du corps par le ventilateur (61) est formé dans le corps (30).

14. Support de séchoir selon la revendication 1, où un trou de refoulement (321) par où passe l'air refoulé vers l'extérieur du corps par le ventilateur (61) est formé entre le corps (30) et le réceptacle (20).

15. Support de séchoir selon la revendication 1, où un trou de refoulement (321) par où passe l'air refoulé vers l'extérieur du corps (30) par le ventilateur (61) est formé dans la base (10).
